# EUROPÄISCHE PATENTSCHRIFT

(11) **EP 0 896 260 B1**
(45) Veröffentlichungstag und Bekanntmachung des Hinweises auf die Patenterteilung: **07.12.2016**
(21) Anmeldenummer: 98114655.8
(22) Anmeldetag: 04.08.1998
(51) Int. Cl.: G03H 1/20, G03H 1/30, G02B 5/32, B42D 25/328

(54) **Verfahren und Vorrichtung zur Herstellung von Hologrammen im Kontaktkopierverfahren**
Method and apparatus for manufacturing holograms by contact copying
Procédé et appareil de fabrication de hologrammes par reproduction en contact

(30) Priorität: 06.08.1997 DE 19734046; 05.03.1998 DE 19809503
(43) Veröffentlichungstag der Anmeldung: 10.02.1999
(73) Patentinhaber: Bundesdruckerei GmbH, 10969 Berlin (DE)
(72) Erfinder: Dausmann, Günther, 85435 Erding (DE); Menz, Irina, Dr., 86420 Diedorf (DE); Gnädig, Klaus, Dr., 81247 München (DE); Yang, Zishao, Dr., 85435 Erding (DE); Hertl, Georg, 82054 Sauerlach (DE); Mathe, Rudolf, 80799 München (DE); de Jongh, Rudi, 83026 Rosenheim (DE); Hoepner, Harald, 12309 Berlin (DE); Löer Thomas, 10961 Berlin (DE); Märtens, Detlef, 13599 Berlin (DE)
(74) Vertreter: Zinnecker, Armin

(56) Entgegenhaltungen:
- EP-A- 0 328 086
- EP-A- 0 375 185
- EP-A- 0 701 183
- EP-A2- 0 428 333
- WO-A1-92/16880
- DE-A- 1 572 600
- FR-A- 2 699 289
- US-A- 4 715 670
- US-A- 5 609 939
- KING M C ET AL: "A NEW APPROACH TO COMPUTER-GENERATED HOLOGRAPHY", APPLIED OPTICS, OPTICAL SOCIETY OF AMERICA, WASHINGTON, DC; US, vol. 9, no. 2, 1 February 1970 (1970-02-01), pages 471-475, XP000955460, ISSN: 0003-6935, DOI: 10.1364/AO.9.000471

## Beschreibung

Die Erfindung betrifft ein Verfahren zur Herstellung eines Hologramms als Kontaktkopie eines Masterhologramms und eine Vorrichtung zur Durchführung dieses Verfahrens.

Bei der Herstellung von Hologrammen werden ein Masterhologramm und ein holographischer Film mit Laserstrahlung bestrahlt. Bei der Serienproduktion von Hologrammen werden die Hologramme vorzugsweise durch Kontaktkopie hergestellt. In diesem Fall befinden sich der Master und der Film miteinander in Kontakt.

Auf dem holographischen Film entsteht ein Hologramm mit der auf dem Master vorhandenen Information. Mit einem Master können demzufolge bei der Serienproduktion auf einfache Weise Hologramme hergestellt werden, die alle dieselbe Information beinhalten. Wenn die Hologramme jedoch ganz oder teilweise verschiedene, individuelle Informationen enthalten sollen, ergeben sich bei der Serienproduktion Schwierigkeiten. Für jedes Hologramm muß dann ein gesonderter Master erstellt werden. Dies ist aufwendig und teuer.

Aus der EP 0 701 183 A2 ist ein Masterhologramm für das Kopieren eines Hologramms im Kontaktverfahren bekannt, wobei das Masterhologramm aus mehreren einzelnen Masterhologrammen besteht, die jeweils verschiedene Informationen tragen.

Die EP 0 375 185 A2 offenbart eine Vorrichtung zur Herstellung einer Kontaktkopie eines Hologramms mit einer Strahlungsquelle für Laserstrahlen zum Bestrahlen eines Masterhologramms und eines Films. Die Vorrichtung umfaßt ferner ein LCD zum Modulieren der kohärenten Strahlung.

Die FR 2 699 289 A offenbart ein Masterhologramm für das Kopieren eines Hologramms im Kontaktverfahren, welches aus drei einzelnen Masterhologrammen besteht, die jeweils verschiedene Informationen tragen, wobei das erste Masterhologramm das Hologramm einer Mattscheibe ist.

Aus der Vorveröffentlichung KING M C ET AL: "A NEW APPROACH TO COMPUTER-GENERATED HOLOGRAPHYF", APPLIED OPTICS, OPTICAL SOCIETY OF AMERICA, WASHINGTON, DC; US, Bd. 9, Nr. 2, 1. Februar 1970 (1970-02-01), Seiten 471-475, XP000955460, ISSN: 0003-6935, DOI: 10.1364/AO.9.000471 ist ein Masterhologramm für das Kopieren eines Hologramms im Kontaktverfahren bekannt, welches aus mehreren einzelnen Masterhologrammen besteht, die jeweils verschiedene Informationen tragen, wobei das erste Masterhologramm das Hologramm einer Mattscheibe ist.

Die EP 0 428 333 A2 offenbart ein Verfahren zum Herstellen eines Hologramms, bei dem in einem ersten Schritt ein Reflexionshologramm hergestellt wird und in einem zweiten Schritt ein photosensitives Material mit örtlich moduliertem Laserlicht bestrahlt wird, das sich vor dem Reflexionshologramm befindet.

Aufgabe der Erfindung ist es, ein verbessertes Verfahren und eine verbesserte Vorrichtung der eingangs angegebenen Art vorzuschlagen, mit denen Hologramme, die verschiedene Informationen beinhalten, auf einfache Weise hergestellt werden können.

Erfindungsgemäß wird diese Aufgabe bei einem Verfahren der eingangs angegebenen Art durch die Merkmale des Anspruchs 1 gelöst. Ein Masterhologramm wird in einen Film kopiert, welches aus mehreren einzelnen Masterhologrammen besteht, die jeweils verschiedene Informationen tragen, wobei ein Masterhologramm das Hologramm einer Mattscheibe ist. Das Masterhologramm und der Film wird mit einer modulierten Laserstrahlung bestrahlt, die durch eine Modulationseinrichtung, welche als LCD ausgebildet ist, moduliert wird.

Durch Beleuchtung eines Ausleuchtungshologramms mit einem divergenten Rekonstruktionsstrahl wird das reelle Bild in einer Maske dort erzeugt, wo sich die Modulationseinrichtung befindet. Das Ausleuchtungshologramm wurde dadurch aufgenommen, dass eine aus einer Mattscheibe und der Maske bestehende Anordnung von einem Objektstrahl durchstrahlt wurde, welcher hinter der Anordnung zur Erzeugung des Ausleuchtungshologramms mit einem konvergenten Referenzstrahl überlagert wurde.

Vorteilhafte Weiterbildungen sind in den Unteransprüchen beschrieben.

Eine vorteilhafte Weiterbildung ist dadurch gekennzeichnet, daß das Masterhologramm aus drei einzelnen Masterhologrammen besteht.

Die Mattscheibe ist vorzugsweise eine geordnete oder strukturierte Mattscheibe in Form eines Linsenrasters.

Vorteilhaft ist es, wenn das Mattscheiben-Masterhologramm als ReflexionsHologramm hergestellt ist.

Nach einer weiteren vorteilhaften Weiterbildung ist das Mattscheiben-Masterhologramm in mindestens zwei Wellenlängen hergestellt.

Das Mattscheiben-Masterhologramm kann in drei Wellenlängen hergestellt sein.

Vorzugsweise sind die einzelnen Masterhologramme in ein einziges Masterhologramm belichtet.

Die Aufgabe der Erfindung wird ferner durch eine erfindungsgemäße Vorrichtung mit den Merkmalen des Anspruchs 8 gelöst. Die Vorrichtung umfasst ein Masterhologramm, welches aus mehreren einzelnen Masterhologrammen besteht, die jeweils verschiedene Informationen tragen, wobei ein Masterhologramm das Hologramm einer Mattscheibe ist. Die Vorrichtung umfasst ferner eine Strahlungsquelle für Laserstrahlung zum Bestrahlen des Masterhologramms und eines Films und eine Modulationseinrichtung zum Modulieren der Laserstrahlung, welche als LCD ausgebildet ist, und mit einem Ausleuchtungshologramm zum Erzeugen des reellen Bilds einer Maske dort, wo sich die Modulationseinrichtung befindet.

Dabei wurde das Ausleuchtungshologramm dadurch aufgenommen, dass eine aus einer Mattscheibe und der Maske bestehende Anordnung von einem Objektstrahl durchstrahlt wurde, welcher hinter der Anordnung zur Erzeugung des Ausleuchtungshologramms mit einem konvergenten Referenzstrahl überlagert wurde.

Die Strahlungsquelle ist dazu ausgebildet, des Ausleuchtungshologramm mit einem divergenten Rekonstruktionsstrahl anzustrahlen. Vorteilhafte Weiterbildungen sind in den weiteren Unteransprüchen beschrieben.

Das Masterhologramm wird vorzugsweise mit mehreren unterschiedlichen Wellenlängen bestrahlt.

Vorzugsweise wird das Masterhologramm mit zwei oder drei unterschiedlichen Wellenlängen bestrahlt.

Vorteilhaft ist es, wenn die Vorrichtung eine Farbeinrichtung zum farbigen Bestrahlen des Masterhologramms und des Films aufweist.

Die Farbeinrichtung ist vorzugsweise eine farbfähige LCD.

Vorzugsweise umfasst die Vorrichtung eine Einrichtung zum Einbelichten verschiedener Aspektwinkel.

Ein Ausführungsbeispiel der Erfindung wird nachstehend anhand der beigefügten Zeichnung im einzelnen erläutert. In der Zeichnung zeigt
Fig. 1 die Herstellung eines Mattscheiben-Masters (nicht Bestandteil der Erfindung)
Fig. 2 eine Vorrichtung zur Herstellung eines Hologramms (nicht Bestandteil der Erfindung) und
Fig. 3 die Herstellung und Benutzung eines Ausleuchtungshologramms.

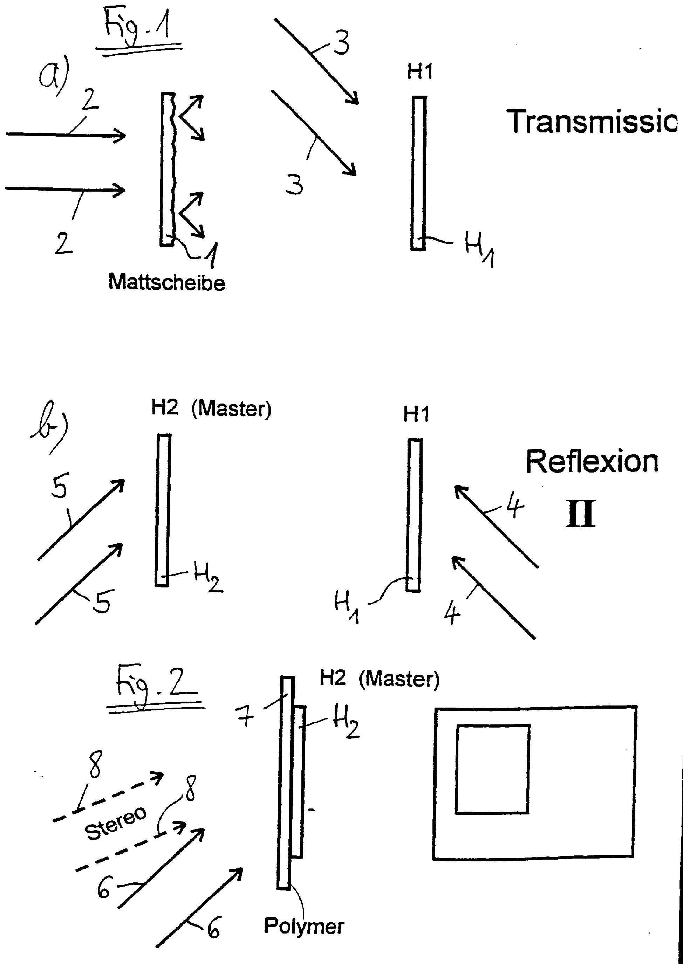

In Fig. 1a ist die Herstellung eines Mattscheiben-Masters schematisch dargestellt. Zunächst wird die Mattscheibe 1 mit Laserlicht 2 durchstrahlt und - als Transmissionshologramm - auf ein erstes Hologramm H1 aufgenommen. Hierzu wird aus dem Laserstrahl 2 ein Teilstrahl ausgekoppelt (in der Zeichnung nicht dargestellt) und in einem Winkel von beispielsweise 45° als Referenzstrahl 3 auf das erste Hologramm H1 geleitet.

Wie aus Fig. 1b ersichtlich, wird dann aus dem ersten Hologramm H1 der Mattscheiben-Master H2 hergestellt. Zu diesem Zweck wird aus dem ersten Hologramm H1 das darin verkörperte Bild der Mattscheibe als reelles Bild rekonstruiert. Dies erfolgt durch Bestrahlung des ersten Hologramms H1 mit einem Laserstrahl 4 im Winkel von 45°. Das zweite Hologramm H2 befindet sich in der Bildebene oder in der Nähe der Bildebene des ersten Hologramms H1, wodurch auf diesem zweiten Hologramm der Mattscheiben-Master erzeugt wird, und zwar als Reflexionshologramm. Wie aus Fig. 1b ersichtlich, wird das zweite Hologramm H2 durch einen ausgekoppelten Laserstrahl 5 im Winkel von z.B. 45° belichtet. Das zweite Hologramm H2 ist dann das Masterhologramm der Mattscheibe für die Serienproduktion der Individualhologramme.

Fig. 2 zeigt eine Vorrichtung zur Herstellung eines individuellen Hologramms mit einer Strahlungsquelle, die Laserstrahlung 6 auf einen Master H2 und einen damit in Kontakt befindlichen, im Strahlengang vor dem Master H2 angeordneten und aus einem Polymer bestehenden Film 7 leitet. Die Laserstrahlung 6 ist durch eine aus einer LCD bestehenden Modulationseinrichtung (in der Zeichnung nicht dargestellt) moduliert. Durch eine erneute Bestrahlung durch Laserstrahlen 8 in einem von der Laserstrahlung 6 abweichenden Winkel kann ein Stereoeffekt erzielt werden.

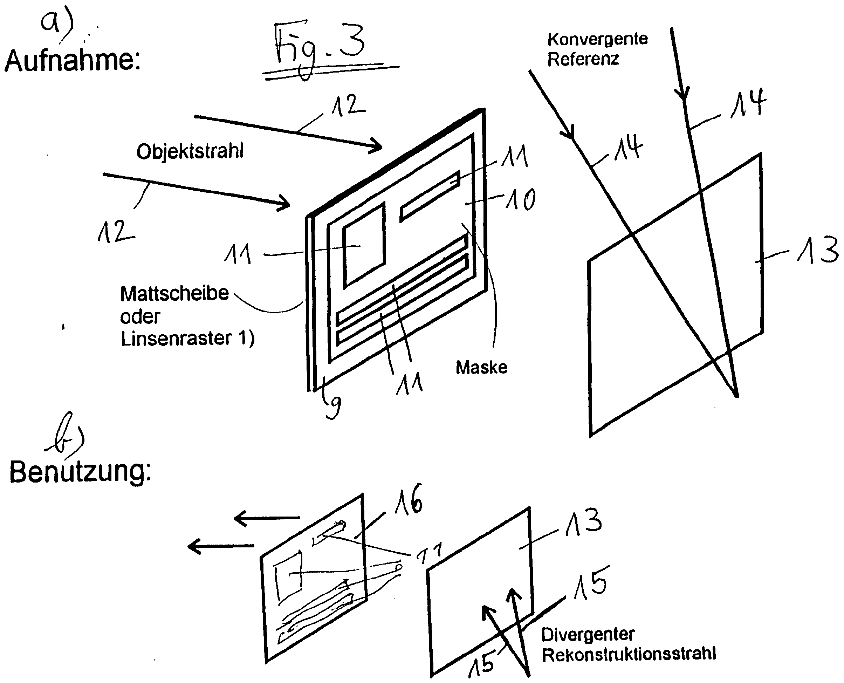

Fig. 3a zeigt eine Anordnung zur Benutzung eines Masterhologramms zur Herstellung eines Ausleuchtungshologramms aus dem vorher produzierten Masterhologramm und in Fig. 3b eine Anordnung zur Benutzung des gemäß Fig. 3a hergestellten Ausleuchtungshologramms. Auf einer Mattscheibe 9 oder einem Linsenraster befindet sich eine Maske 10 mit durchsichtigen Bereichen 11 und undurchsichtigen Bereichen außerhalb dieser durchsichtigen Bereiche 11. Die durchsichtigen Bereiche 11 sind dort angeordnet, wo später auf dem holographischen Film Hologrammbereiche entstehen sollen.

Die aus Mattscheibe 9 und Maske 10 bestehende Anordnung wird von einem Objektstrahl 12 angestrahlt und in den durchsichtigen Bereichen 11 durchstrahlt. In Strahlrichtung hinter Mattscheibe 9 und Maske 10 ist ein Hologramm 13 angeordnet, das von einem konvergenten Referenzstrahl 14 angestrahlt wird. Hierdurch entsteht das Ausleuchtungshologramm 13.

Dieses Ausleuchtungshologramm 13 kann dann bei der Herstellung von Hologrammen verwendet werden. Es wird, wie aus Fig. 3b ersichtlich, von einem divergenten Rekonstruktionsstrahl 15 angestrahlt, wodurch in der Bildebene die Strahlung vorwiegend in diejenigen Bereiche geleitet wird, in denen sich die Aussparungen 11 der Maske 10 befunden haben.

Wie aus Fig. 3 ersichtlich, wird durch das Ausleuchtungshologramm 13 der bei der Herstellung eines Hologramms verwendete Laserstrahl geformt (Ausleuchtungshologramme werden dementsprechend auch als Strahlformer bzw. Beam-Shaper bezeichnet). Durch das Ausleuchtungshologramm 13 wird die Lichtenergie in denjenigen Bereichen konzentriert, in denen sich die durchlässigen Bereiche 11 der Maske 10 befunden haben. Die Maske 10 wird bei der Benutzung gemäß Fig. 3a als reelles Bild 16 erzeugt. Dabei wird die Anordnung so getroffen, daß das reelle Bild 16 der Maske 10 dort entsteht, wo sich die LCD befindet, die den bei der Herstellung des Hologramms verwendeten Strahl moduliert. Damit werden auf der modulierenden LCD die ausgewählten Bildbereiche besonders stark beleuchtet bzw. konzentriert beleuchtet, was zu einer wesentlich höheren Lichtausbeute führt. Während bei einem unkorrigierten Verfahren die Lichtausbeute beispielsweise lediglich 5 % beträgt, kann mit dem verbesserten Verfahren eine Lichtausbeute von 50 % und teilweise bis zu 80 % erreicht werden, bei Dichromat-Verfahren sogar bis zu 90 %. Bei einem Wirkungsgrad von 50 % des Hologramms 13 (Beugungswirkungsgrad) wird 50 % der gesamten Laserleistung in die durchlässigen Bereiche 11 geleitet. Daraus ergibt sich ein erheblicher Lichtgewinn, wodurch wiederum entsprechend kürzere Belichtungszeiten erreicht werden können.

## Patentansprüche

1. Verfahren zur Herstellung eines Hologramms als Kontaktkopie eines Masterhologramms (H₂), bei dem
ein Masterhologramm in einen Film kopiert wird, welches aus mehreren einzelnen Masterhologrammen besteht, die jeweils verschiedene Informationen tragen, wobei eines der einzelnen Masterhologramme (H₂) das Hologramm einer Mattscheibe ist,
wobei das Masterhologramm (H₂) und der Film (7) mit einer modulierten Laserstrahlung (6, 8) bestrahlt wird, die durch eine Modulationseinrichtung, welche als LCD ausgebildet ist, moduliert wird,
wobei durch Beleuchtung eines Ausleuchtungshologramms (13) mit einem divergenten Rekonstruktionsstrahl (15) das reelle Bild (16) einer Maske (10) dort erzeugt wird, wo sich die Modulationseinrichtung befindet,
und wobei das Ausleuchtungshologramm (13) dadurch aufgenommen wurde, daß eine aus einer Mattscheibe (9) und der Maske (10) bestehende Anordnung von einem Objektstrahl (12) durchstrahlt wurde, welcher hinter der Anordnung zur Erzeugung des Ausleuchtungshologramms mit einem konvergenten Referenzstrahl überlagert wurde.

2. Verfahren nach Anspruch 1, **dadurch gekennzeichnet, daß** das Masterhologramm aus drei einzelnen Masterhologrammen besteht.

3. Verfahren nach Anspruch 1 oder 2, **dadurch gekennzeichnet, daß** die Mattscheibe eine geordnete oder strukturierte Mattscheibe in Form eines Linsenrasters ist.

4. Verfahren nach einem der vorhergehenden Ansprüche, **dadurch gekennzeichnet, daß** das Mattscheiben-Masterhologramm (H₂) als ReflexionsHologramm hergestellt ist.

5. Verfahren nach einem der vorhergehenden Ansprüche, **dadurch gekennzeichnet, daß** das Mattscheiben-Masterhologramm (H₂) in mindestens zwei Wellenlängen hergestellt ist.

6. Verfahren nach Anspruch 5, **dadurch gekennzeichnet, daß** das Mattscheiben-Masterhologramm (H₂) in drei Wellenlängen hergestellt ist.

7. Verfahren nach einem der vorhergehenden Ansprüche, **dadurch gekennzeichnet, daß** die einzelnen Masterhologramme in ein einziges Masterhologramm belichtet sind.

8. Vorrichtung zur Durchführung des Verfahrens nach einem der vorhergehenden Ansprüche
mit einem Masterhologramm (H₂), welches aus mehreren einzelnen Masterhologrammen besteht, die jeweils verschiedene Informationen tragen, wobei eines der einzelnen Masterhologramme (H₂) das Hologramm einer Mattscheibe ist,
mit einer Strahlungsquelle für Laserstrahlung (6, 8) zum Bestrahlen des Masterhologramms (H₂) und eines Films (7),
mit einer Modulationseinrichtung zum Modulieren der Laserstrahlung (6, 8), welche als LCD ausgebildet ist, und mit einem Ausleuchtungshologramm (13) zum Erzeugen des reellen Bilds (16) einer Maske (10) dort, wo sich die Modulationseinrichtung befindet,
wobei das Ausleuchtungshologramm (13) dadurch aufgenommen wurde, daß eine aus einer Mattscheibe (9) und der Maske (10) bestehende Anordnung von einem Objektstrahl (12) durchstrahlt wurde, welcher hinter der Anordnung zur Erzeugung des Ausleuchtungshologramms mit einem konvergenten Referenzstrahl überlagert wurde, und
wobei die Strahlungsquelle dazu ausgebildet ist, das Ausleuchtungshologramm (13) mit einem divergenten Rekonstruktionsstrahl (15) anzustrahlen.

9. Vorrichtung nach Anspruch 8, **dadurch gekennzeichnet, daß** das Masterhologramm (H₂) mit mehreren unterschiedlichen Wellenlängen bestrahlt wird.

10. Vorrichtung nach Anspruch 9, **dadurch gekennzeichnet, daß** das Masterhologramm (H₂) mit zwei oder drei unterschiedlichen Wellenlängen bestrahlt wird.

11. Vorrichtung nach einem der Ansprüche 8 bis 10, **gekennzeichnet durch** eine Farbeinrichtung zum farbigen Bestrahlen des Masterhologramms und des Films.

12. Vorrichtung nach Anspruch 11, **dadurch gekennzeichnet, daß** die Farbeinrichtung eine farbfähige LCD ist.

13. Vorrichtung nach einem der Ansprüche 8 bis 12, **gekennzeichnet durch** eine Einrichtung zum Einbelichten verschiedener Aspektwinkel.

## Claims

1. A method of manufacturing a hologram as a contact copy of a master hologram (H₂), in which
a master hologram which consists of a plurality of individual master holograms which each carry different information is copied into a film, wherein one of the individual master holograms (H₂) is the hologram of a ground glass screen,
wherein the master hologram (H₂) and the film (7) are irradiated by modulated laser radiation (6, 8) which is modulated by a modulation device which is configured as an LCD;
wherein the real image (16) of a mask (10) is produced by illuminating an illumination hologram (13) with a divergent reconstruction beam (15) where the modulation device is located;
and wherein the illumination hologram (13) is recorded in that an arrangement comprising a ground glass screen (9) and the mask (10) is irradiated by an object beam (12) which has a convergent reference beam superposed on it after the arrangement to produce the illumination hologram.

2. A method in accordance with claim 1, **characterized in that** the master hologram comprises three individual master holograms.

3. A method in accordance with claim 1 or claim 2, **characterized in that** the ground glass screen is an ordered or structured ground glass screen in the form of a lenticular screen.

4. A method in accordance with one of the preceding claims, **characterized in that** the ground glass screen master hologram (H₂) is manufactured as a reflection hologram.

5. A method in accordance with one of the preceding claims, **characterized in that** the ground glass screen master hologram (H₂) is manufactured in at least two wavelengths.

6. A method in accordance with claim 5, **characterized in that** the ground glass screen master hologram (H₂) is manufactured in three wavelengths.

7. A method in accordance with one of the preceding claims, **characterized in that** the individual master holograms are exposed in a single master hologram.

8. An apparatus for carrying out the method in accordance with one of the preceding claims,
having a master hologram (H₂) which consists of a plurality of individual master holograms which each carry different information, wherein one of the individual master holograms (H₂) is the hologram of a ground glass screen,
having a radiation source for laser radiation (6, 8) for irradiating the master hologram (H₂) and a film (7),
having a modulation device for modulating the laser radiation (6, 8) which is configured as an LCD; and having an illumination hologram (13) for producing the real image (16) of a mask (10) where the modulation device is located,
wherein the illumination hologram (13) is recorded in that an arrangement comprising a ground glass screen (9) and the mask (10) is irradiated by an object beam (12) which has a convergent reference beam superposed on it after the arrangement to produce the illumination hologram; and wherein
the radiation source is configured to irradiate the illumination hologram (13) with a divergent reconstruction beam (15).

9. An apparatus in accordance with claim 8, **characterized in that** the master hologram (H₂) is irradiated by a plurality of different wavelengths.

10. An apparatus in accordance with claim 9, **characterized in that** the master hologram (H₂) is irradiated by two or three different wavelengths.

11. An apparatus in accordance with one of the claims 8 to 10, **characterized by** a color device for the color irradiation of the master hologram and of the film.

12. An apparatus in accordance with claim 11, **characterized in that** the color device is a color-enabled LCD.

13. An apparatus in accordance with one of the claims 8 to 12, **characterized by** a device for imprinting different aspect angles.

## Revendications

1. Procédé de fabrication d'un hologramme sous forme de reproduction par contact d'un hologramme maître (H₂), selon lequel
on copie dans un film un hologramme maître, qui se compose de plusieurs hologrammes maîtres individuels, qui contiennent respectivement différentes informations, l'un des hologrammes maîtres (H₂) individuels étant l'hologramme d'un dépoli,
dans lequel l'hologramme maître (H₂) et le film (7) sont irradiés par un faisceau laser modulé (6, 8), qui est modulé par un dispositif de modulation, qui est réalisé sous la forme d'écran à cristaux liquides,
dans lequel, en éclairant un hologramme d'éclairage (13) avec un faisceau de restitution divergent (15), l'image réelle (16) d'un masque (10) est générée là où se trouve le dispositif de modulation,
et dans lequel l'hologramme d'éclairage (13) a été enregistré par le fait qu'un ensemble constitué d'un dépoli (9) et du masque (10) a été traversé par un faisceau objet (12) auquel a été superposé un faisceau de référence convergent derrière l'ensemble de génération de l'hologramme d'éclairage.

2. Procédé selon la revendication 1, **caractérisé en ce que** l'hologramme maître se compose de trois hologrammes maîtres individuels.

3. Procédé selon la revendication 1 ou 2, **caractérisé en ce que** le dépoli est un dépoli ordonné ou structuré sous la forme d'un écran lenticulaire.

4. Procédé selon l'une des revendications précédentes, **caractérisé en ce que** l'hologramme maître (H₂) du dépoli est fabriqué sous la forme d'un hologramme par réflexion.

5. Procédé selon l'une des revendications précédentes, **caractérisé en ce que** l'hologramme maître (H₂) du dépoli est fabriqué dans au moins deux longueurs d'onde.

6. Procédé selon la revendication 5, **caractérisé en ce que** l'hologramme maître (H₂) du dépoli est fabriqué dans trois longueurs d'onde.

7. Procédé selon l'une des revendications précédentes, **caractérisé en ce que** les hologrammes maîtres individuels sont exposés dans un unique hologramme maître.

8. Dispositif destiné à exécuter le procédé selon l'une des revendications précédentes, comprenant
un hologramme maître (H₂), qui se compose de plusieurs hologrammes maîtres individuels, qui contiennent respectivement différentes informations, l'un des hologrammes maîtres (H₂) individuels étant l'hologramme d'un dépoli,
une source de rayonnement pour rayonnement laser (6, 8) destinée à irradier l'hologramme maître (H₂) et un film (7),
un dispositif de modulation destiné à moduler le rayonnement laser (6, 8), qui est réalisé sous la forme d'un écran à cristaux liquides, et un hologramme d'éclairage (13) destiné à générer l'image réelle (16) d'un masque (10) là où se trouve le dispositif de modulation,
dans lequel l'hologramme d'éclairage (13) a été enregistré par le fait qu'un ensemble constitué d'un dépoli (9) et du masque (10) a été traversé par un faisceau objet (12) auquel a été superposé un faisceau de référence convergent derrière l'ensemble de génération de l'hologramme d'éclairage et
dans lequel la source de rayonnement est conçue pour illuminer l'hologramme d'éclairage (13) avec un faisceau de restitution divergent (15).

9. Dispositif selon la revendication 8, **caractérisé en ce que** l'hologramme maître (H₂) est irradié avec plusieurs longueurs d'onde différentes.

10. Dispositif selon la revendication 9, **caractérisé en ce que** l'hologramme maître (H₂) est irradié avec deux ou trois longueurs d'onde différentes.

11. Dispositif selon l'une des revendications 8 à 10, **caractérisé par** un dispositif à couleur pour irradier en couleur l'hologramme maître et le film.

12. Dispositif selon la revendication 11, **caractérisé en ce que** le dispositif à couleur est un écran couleur à cristaux liquides.

13. Dispositif selon l'une des revendications 8 à 12, **caractérisé par** un dispositif destiné à irradier différents angles de présentation.
